Europäisches Patentamt

European Patent Office

Office européen des brevets

(11) Publication number: **0 037 453**
**B1**

(12) EUROPEAN PATENT SPECIFICATION

(45) Date of publication of patent specification: **02.04.86**

(51) Int. Cl.⁴: **C 08 L 23/16,** C 08 L 23/12

(21) Application number: **81100634.5**

(22) Date of filing: **29.01.81**

(54) **EPR or EPDM blends containing polypropylene.**

(30) Priority: **01.02.80 US 117607**

(43) Date of publication of application:
**14.10.81 Bulletin 81/41**

(45) Publication of the grant of the patent:
**02.04.86 Bulletin 86/14**

(84) Designated Contracting States:
**DE GB IT NL**

(56) References cited:
**FR-A-2 093 589**
**GB-A- 825 884**
**GB-A-1 099 297**
**US-A-4 005 054**
**US-A-4 247 661**

The file contains technical information
submitted after the application was filed and
not included in this specification

(73) Proprietor: **POLYSAR INTERNATIONAL S.A.**
**P.O. Box 1063 Route de Beaumont 10**
**CH-1071 Fribourg (CH)**

(72) Inventor: **Cinadr, Bernard Frank**
**8312 Whitewood Road**
**Brecksville Ohio 44141 (US)**

(74) Representative: **von Kreisler, Alek, Dipl.-Chem.**
**et al**
**Deichmannhaus am Hauptbahnhof**
**D-5000 Köln 1 (DE)**

## Description

### Background of the invention

Polymers of ethylene and propylene constitute important articles of commerce for numerous applications such as hose, belts, coated fabrics, wire insulation and jacketing, soles and heels, sponges, and passenger tires. These polymers, which display outstanding processing characteristics, have Mooney viscosities (ML-4/100°C (212°F)) in the range of 10 to 100. Unfortunately, in their uncured state, these polymers tend to flow in storage. The problem of cold-flow has been most acute with the lowest viscosity grades of such polymers although even the higher viscosity grades tend to exhibit this behavior during the warmer months of the year.

The problem of cold-flow is encountered in the storage of raw and uncured polymers which are generally stored in bags prior to use. During storage and transportation, the bags of raw polymers are stacked on top of each other in cardboard carton to a height exceeding several feet. Due to cold-flow, the bags at the lower portion of the pile have occasionally burst under the weight of the material above it. This can lead to serious finishing and high plant clean-up losses as well as bale-to-bale adhesion and cardboard contamination.

There are many patents that disclose the use of polypropylene in connection with polymers of ethylene and propylene and in many instances, other substances, however, none of these patents disclose blending of polypropylene with polymers of ethylene and propylene to counteract cold-flow properties thereof. For instance, U.S. Patent 3,536,653 to Bickel discloses EP rubber compositions containing extender oil and polypropylene to improve tackiness. On the basis of 100 parts of the EP rubber, amount of extender oil used is in excess of 50 parts and amount of polypropylene can vary from 2.5 to 50 parts.

U.S. Patent 4,086,301 to Zerpner discloses EP and EPDM rubbers containing a cross-linking agent and 5 to 100 parts of polypropylene per 100 parts of the rubber. Addition of the cross-linking agent and polypropylene is made to render the rubber readily heat-sealable. U.S. Patent 3,564,080 to Pedretti discloses EP and EPDM rubbers containing a curing agent and an atactic, linear, substantially amorphous polypropylene having molecular weight of 14,000 to 48,000 as extender or diluent for the rubber which is added to the rubber on a roll mixer. Amount of polypropylene can vary from 1 to 90 parts to 100 parts of rubber.

U.S. Patent 3,361,850 to Young describes a solution to the cold-flow problem of the polymers by addition thereto of up to 5% low density polyethylene. It has been confirmed that high density polyethylene does not provide the desired improvement in the cold-flow property. The problem with the polymer blends containing low density polyethylene is that products manufactured from such blends exhibit the undesirable reduction in impact strength at low temperatures. It is desirable, therefore, to overcome the cold-flow problem with respect to EP and EPDM rubbers without incurring the adverse affect relative to impact strength at low temperatures.

### Summary of the invention

This invention relates to EP and EPDM polymers that normally exhibit elastic flow under ambient temperature containing a sufficient amount of polypropylene to substantially reduce cold-flow of such polymers. No reports have been received that low temperature impact strength of articles made from such polymers is adversely affected by incorporation of polypropylene.

### Detailed description of the invention

It was discovered that cold-flow problems of EP and EPDM raw rubbers can be overcome by blending a sufficient amount of polypropylene therewith. The polypropylenes suitable for blending with the elastomeric polymers include crystalline or isotactic polypropylene which has greater than 90% hot heptane insolubles. Such polypropylene resins have densities of 0.89 to 0.91 g/cc and melt flow rates ranging from 0.5 to 30 g/10 minutes (MFR, 230°C, 2160 g load). It is preferred to employ polypropylene with a melt flow rate of 1 to 20 g/10 minutes, and more preferably, with a melt flow rate of 4 to 12, as measured at 230°. Molecular weight (Mw) of crystalline polypropylene suitable for the purpose of the invention can vary from 180,000 to 500,000 and preferably from 250,000 to 350,000.

Amount of polypropylene used with the elastomeric polymers should be sufficient to overcome or reduce the cold-flow property. On the basis of empirical studies, amount of polypropylene can vary from 0.5 to 20%, based on the weight of the elastomeric polymers, preferably from 1 to 10 parts.

The EP copolymers of ethylene and propylene, and EPDM terpolymers of ethylene, propylene and a minor amount of a diene are elastomers which exhibit plastic flow to a perceptible degree under the conventional temperature and storage conditions employed in the rubber trade. Such elastomeric polymers, especially amorphous polymers, should have an uncompounded or raw Mooney viscosity ML (1+4) at 121°C (250°F) of 10 to 100, preferably 20 to 40, and crystallinity at room temperature without stretch of 0 to 15%, especially 0 to 10%. Ethylene content of such elastomeric polymers should be at least 40 mole %, preferably at least 50 mole %, the balance being propylene, and in the case of the terpolymers, a minor amount of a diene on the order of less than 10 mole % and usually not over 5%. The preferred dienes are nonconjugated dienes. The nonconjugated diene can be any one or more of those generally known in the art but preferably is 1,4-hexadiene, ethylidene norbornenes, cyclooctadiene or dicyclopentadiene. Minor amounts of the other copolymerizable monomers such as hexene, butene and so forth, can be used as long as they do not adversely affect the properties of the elastomeric polymers. Blends of the polymers can be used as well as mixtures of dienes. The elastomeric polymers can have high or low Mooney viscosities, can be crystalline or amorphous, and can have high to low crystalline content, as long as the polymer blends fall within the definition set forth above. The elastomeric polymers discussed herein, and their methods of preparation and curing, are well known in the art and are commercially available.

It has been determined that increase in viscosity of the EP or EPDM polymers due to the presence of polypropylene is not the mechanism responsible for increased resistance to flow. Mooney viscosity increased by 12—15 points at 100°C by the addition of 5% polypropylene, however, the resistance to flow is much greater than can be attributed to the increased viscosity.

Examples

The copolymers of ethylene and propylene used in these examples were prepared in a conventional manner by polymerizing in suspension ethylene and propylene in the presence of vanadium catalyst copolymers containing 60 mol percent ethylene and 40 mol percent propylene. Please refer to U.S. Patent 3,702,840 for further description of the preparation procedure. Polypropylene and the copolymer were mixed and pressed repeatedly about five times until a film of uniform clarity was formed. Slabs 2,03 mm (80 mils) thick were prepared from the mixture and the copolymers by compression molding between Mylar sheets in a tensile mold. Test specimens were prepared from plied disks cut with a circular die from the molded slabs, with care being taken to exclude air pockets.

Flow characteristics of the blends were measured with a Wallace parallel plate plastometer. Test specimens were conditioned for a minimum of 16 hours at the test temperature and then subjected to a compressive load of 5000 grams. Sample thickness was determined as a function of time under load.

The table below gives results in terms of percent compression of the control and test samples at 24°C (75°F) using the indicated amounts of polypropylene. All the test samples 1 to 8 were prepared with an EP copolymer of 60,000 molecular weight, which was Control A; Control B was also an EP copolymer but its molecular weight was 80,000. Test samples 10 and 11 were prepared with a partially crystalline EP copolymer with a molecular weight of 45,000. Pro-Fax® polypropylene from Hercules of different melt flow index was used. Moplen® propylene was obtained from Montedison. Data for the subject experiments is presented below:

| Amount of polypropylene | Melt index | Percent compression after time (in minutes) under load | | | | | | |
|---|---|---|---|---|---|---|---|---|
| | | 2 | 5 | 10 | 30 | 60 | 120 | 240 |
| 1. Control A | | 13 | 23 | 33 | 47 | 55 | —— | —— |
| 2. 5% Pro-fax 6523 | 4 | 1 | 2 | 2 | 3 | 4 | 5 | 7 |
| 3. 2% Pro-fax 6523 | 4 | 5 | 9 | 13 | 22 | 29 | 36 | 44 |
| 4. 5% Pro-fax 6323 | 12 | 1 | 1 | 1 | 2 | 3 | 4 | 5 |
| 5. Control B | | 3 | 5 | 8 | 15 | 21 | 28 | 34 |
| 6. Control C⁺ | | 6 | 9 | 11 | 16 | 20 | 24 | —— |
| 7. 5% Pro-fax 6523⁺ | 4 | 4 | 6 | 8 | 11 | 14 | 16 | 20 |
| 8. 10% Pro-fax 6323⁺ | 12 | 1 | 1 | 1 | 2 | 2 | 2 | 3 |
| Comparative examples | | | | | | | | |
| 1. 5% Pro-fax 6723° | 0.8 | 1 | 2 | 3 | 7 | 10 | 15 | 20 |
| 2. 5% Moplen F300 | 30 | 4 | 8 | 13 | 25 | 33 | 40 | —— |
| 3. 5% Pro-fax 8523 | 4 | 5 | 10 | 15 | 27 | 35 | 43 | 50 |

⁺Temperature of 49°C (120°F)

**Claims**

1. A process to reduce the cold flow of copolymers of ethylene and propylene or of terpolymers of ethylene, propylene and a non-conjugated diene, which polymers normally exhibit plastic flow under ambient temperature and storage conditions, characterized in that 0,5 to 20%, based on the weight of said elastomeric polymers, preferably 1 to 10% by weight, polypropylene with a density of 0.89 to 0.91 g/cm$^3$ and a melt flow rate at 230°C and 2160 g load of 4 to 12 g/10 minutes is blended with said polymers, whereby said polymers contain at least 40 mole % of ethylene and less than 10 mole % of diene, and have a Mooney viscosity (ML 1+4 at 121°C) of 20 to 40.

2. Process according to claim 1 wherein the diene of said terpolymers is selected from 1,4-hexanediene, ethylidene norbornenes, dicyclopentadienes, cyclooctadienes, and mixtures thereof.

**Patentansprüche**

1. Verfahren zur Reduzierung des kalten Fließens von Copolymeren aus Ethylen und Propylen oder von Terpolymeren aus Ethylen, Propylen und einem nicht-konjugierten Dien, welche Polymere normalerweise unter Umgebungs-Temperatur und Lagerbedingungen plastisches Fließen zeigen, dadurch gekennzeichnet, daß 0,5 bis 10%, bezogen auf das Gewicht der elastomeren Polymeren, vorzugsweise 1 bis 10 Gew.-% Polypropylen mit einer Dichte von 0,89 bis 0,91 g/cm$^3$ und einer Schmelzflußrate von 4 bis 12 g/10 min bei 230°C und einer Last von 2160 g mit den Polymeren vermischt wird, wodurch diese Polymeren wenigstens 40 Mol-% Ethylen und weniger als 10 Mol-% Dien enthalten und eine Mooney-Viskosität (ML 1+4 bei 121°C) von 20 bis 40 haben.

2. Verfahren nach Anspruch 1, dadurch gekennzeichnet, daß das Dien der Terpolymeren aus 1,4-Hexadien, Ethylidennorbornenen, Dicyclopentadienen, Cyclooctadienen und deren Mischungen ausgewählt ist.

**Revendications**

1. Procédé pour diminuer le fluage de copolymères de l'éthylène et du propylène ou de terpolymères de l'éthylène, du propylène et d'un diène non conjugué, ces polymères présentant normalement de l'écoulement plastique dans les conditions de température ambiante et de stockage, procédé caractérisé en ce qu'on incorpore par mélangeage auxdits polymères 0,5 à 20%, par rapport au poids desdits polymères élastomères, de préférence 1 à 10% en poids, de polypropylène ayant une masse volumique de 0,89 à 0,91 g/cm$^3$ et une vitesse d'écoulement à l'état fondu à 230°C sous une charge de 2160 g de 4 à 12 g/10 minutes, de sorte que lesdits polymères contiennent au moins 40 moles % d'éthylène et moins de 10 moles % de diène, et ont un indice consistométrique Mooney (ML 1+4 à 121°C) de 20 à 40.

2. Procédé selon la revendication 1, dans lequel le diène desdits terpolymères est choisi parmi le 1,4-hexadiène, les éthylidène norbornènes, les dicyclopentadiènes, les cyclooctadiènes et leurs mélanges.